# EUROPEAN PATENT SPECIFICATION

(11) **EP 4 195 382 B1**
(45) Date of publication and mention of the grant of the patent: **01.07.2026**
(21) Application number: 21903696.9
(22) Date of filing: 24.11.2021
(51) Int. Cl.: H01M 50/213, H01M 50/249

(54) **BATTERY PACK, POWER SYSTEM AND VEHICLE**
BATTERIEPACK, STROMVERSORGUNGSSYSTEM UND FAHRZEUG
BLOC-BATTERIE, SYSTÈME D'ALIMENTATION ET VÉHICULE

(30) Priority: 07.12.2020 KR 20200169919
(43) Date of publication of application: 14.06.2023
(73) Proprietor: LG Energy Solution, Ltd., Seoul 07335 (KR)
(72) Inventor: SEON, Sang-Ok, Daejeon 34122 (KR)
(74) Representative: Goddar, Heinz J.
(86) International application number: PCT/KR2021/017440
(87) International publication number: WO 2022/124650

(56) References cited:
- JP-A- 2004 079 188
- JP-A- 2005 020 867
- JP-B2- 6 493 553
- JP-B2- 6 493 553
- KR-A- 20180 058 679
- KR-B1- 102 178 946
- US-A1- 2004 013 938
- US-A1- 2006 275 655
- US-A1- 2007 003 825
- US-A1- 2013 294 019

## Description

### TECHNICAL FIELD

The present disclosure relates to a battery pack, a power system, and a vehicle, and more particularly, to a battery pack including a connection terminal having a high durability, a power system, and a vehicle.

The present application claims priority to Korean Patent Application No. 10-2020-0169919 filed on December 7, 2020 in the Republic of Korea.

### BACKGROUND ART

Currently commercialized secondary batteries include nickel-cadmium batteries, nickel-hydrogen batteries, nickel-zinc batteries, and lithium secondary batteries. Among them, compared to nickel-based secondary batteries, lithium secondary batteries have almost no memory effect and thus are freely charged and discharged and have a very low self-discharge rate and have a high energy density.

These lithium secondary batteries mainly use a lithium-based oxide and a carbon material as a positive electrode active material and a negative electrode active material, respectively. A lithium secondary battery includes an electrode assembly in which a positive electrode plate and a negative electrode plate respectively coated with a positive electrode active material and a negative electrode active material are disposed with a separator interposed therebetween, and an outer casing, namely, a cylindrical battery can for sealingly accommodating the electrode assembly together with an electrolyte, that is, a battery pouch outer casing.

Recently, secondary batteries have been widely used not only in small devices such as portable electronic devices, but also in medium and large devices such as automobiles and power storage devices. When used in such medium and large devices, a large number of secondary batteries are electrically connected to increase capacity and output.

In recent years, demand for a plurality of secondary batteries electrically connected in series and/or parallel, and a battery pack including a module case in which these secondary batteries have been accommodated and a battery management system (BMS) is increasing as the need for a large-capacity structure including usage as an energy storage source increases.

In general, such a battery pack further includes a pack housing in order to receive and store a battery module having a plurality of secondary batteries embedded therein. The pack housing is provided with a connection terminal to electrically connect to other external devices. In other words, such a connection terminal is configured to electrically connect to another connection terminal of an external device in order to transmit power in the battery pack to the external device. For example, the external device may have an accommodating space into which the battery pack is inserted. In this case, when the battery pack is inserted into this accommodating space, the connection terminal included in the battery pack and the connection terminal included in the accommodating space of the external device contact each other to be electrically connected to each other.

However, when a conventional battery pack is inserted into an accommodating space of an external device and simultaneously is electrically connected to the external device, in a process in which a connection terminal of the battery pack and another connection terminal of the external device contact each other, collision between the connection terminals inevitably occurs in a direction in which the battery pack is inserted. Moreover, when insertion and withdrawal of the battery pack is repeated, the connection terminals are damaged and have a decreased durability due to frequent collisions between the connection terminals. Furthermore, as the load of the battery pack increases, a heavy load of the battery pack is transmitted to the connection terminal of the battery pack and the other connection terminal of the external device, and damage to the connection terminals may be more severe.

Patent documents US 2007/0003825 A1, US 2004/0013938 A1, US 2006/0275655 A1, US 2013/0294019 A1 and JP 6493553 B2 respectively describe a battery pack assembly for portable or mobile power systems.

Accordingly, the conventional battery pack, and a power system including the same, have a problem in that a poor connection between the battery pack and an external device occurs within a short period of time or the lifespan of a connection terminal is shortened, thereby causing inconvenience to users.

### DISCLOSURE

### Technical Problem

The present disclosure is designed to solve the problems of the related art, and therefore the present disclosure is directed to providing a battery pack including a connection terminal having a high durability, a power system, and a vehicle, as set out in the appended set of claims.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a battery pack for a power system including a mounting portion having an accommodating space and at least one first connection terminal located on a surface in the accommodating space of the mounting portion that is perpendicular to an insertion direction between the mounting portion and a pack housing of the battery pack, the battery pack configured to electrically connect to the power system and including
a plurality of battery cells;
the pack housing having an internal space to accommodate the plurality of battery cells, and configured to be inserted into the accommodating space of the mounting portion and to be coupled to the mounting portion at an insertion portion through a rotational movement; and
a second connection terminal electrically connected to the plurality of battery cells, located on a surface of the pack housing that is perpendicular to the insertion direction between the mounting portion and the pack housing, and configured to be contactable with the first connection terminal when the pack housing is coupled to the mounting portion through the rotational movement.

The second connection terminal is located a predetermined distance apart from a rotation axis of the rotation movement of the pack housing.

The second connection terminal includes: at least two extension parts extending in a circular arc shape; and at least one connection part extending from each of the extension parts to between the extension parts.

The pack housing further includes a support formed as a portion of a lower surface of the pack housing, which protrudes from an outer surface of the pack housing in the insertion direction in which the pack housing is inserted into the mounting portion.

The mounting portion may include an insertion guide groove formed by recessing a portion of an inner surface of the accommodating space in an outward direction and extending in a vertical direction, and the pack housing may include a guide bar formed as a portion of the outer surface of the pack housing which protrudes in the outward direction and extends in the vertical direction, and configured to be inserted into the insertion guide groove.

The battery pack may further include a detachment member that is configured to restrict the rotational movement of the pack housing in the mounting portion or release the restriction of the rotational movement so that the rotational movement of the pack housing is possible.

The mounting portion may include a fixing groove recessed in a predetermined size, and the detachment member may include a fixing protrusion configured to be inserted into the fixing groove.

In one aspect of the present disclosure, there is provided a power system configured to supply power to an external device, the power system including:
a mounting portion having an accommodating space;
at least one first connection terminal electrically connected to the external device and located on a surface in the accommodating space of the mounting portion that is perpendicular to an insertion direction between the mounting portion and a pack housing of a battery pack of the power system; and
the above-described battery pack.

The power system may further include an elastic member configured to elastically press the pack housing in a direction opposite to the insertion direction when the battery pack is inserted into the mounting portion.

In one aspect of the present disclosure, there is provided a vehicle including the above-described power system.

### Advantageous Effects

According to an aspect of the present disclosure, a second connection terminal configured to contact a first connection terminal when a pack housing is coupled to a mounting portion through a rotational movement is provided, and thus the connection terminals may be connected to each other through a rotational movement. Accordingly, the load of a heavy battery pack may not be transmitted to the connection terminals, so that damage to the connection terminals may be minimized. In other words, unlike a conventional method in which connection terminals are electrically connected by inserting a conventional pack housing in a lower direction, the connection terminals do not collide with each other in a vertical direction, and thus the durability of the connection terminals may be effectively increased.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view of a battery pack according to an embodiment of the present disclosure.
FIG. 2 is a schematic exploded perspective view of separation of a battery pack from a mounting portion of a power system, according to an embodiment of the present disclosure.
FIG. 3 is a schematic perspective view of insertion of a battery pack into a mounting portion of a power system, according to an embodiment of the present disclosure.
FIG. 4 is a schematic perspective view of insertion of a battery pack into a mounting portion of a power system and then rotation of the battery pack, according to an embodiment of the present disclosure.
FIG. 5 is a schematic plan view of a mounting portion of a power system according to an embodiment of the present disclosure.
FIG. 6 is a schematic bottom view of a battery pack according to an embodiment of the present disclosure.
FIG. 7 is a schematic front view of a battery cell of a battery pack according to an embodiment of the present disclosure.
FIG. 8 is a schematic partial perspective view of some internal components of a battery pack according to an embodiment of the present disclosure.
FIG. 9 is a schematic bottom view of a battery pack according to another embodiment of the present disclosure.
FIG. 10 is a schematic vertical cross-sectional view of a second connection terminal and a first connection terminal of a battery pack according to another embodiment of the present disclosure.
FIG. 11 is a schematic perspective view of a detachment member of a battery pack according to an embodiment of the present disclosure.
FIG. 12 is a schematic horizontal cross-sectional view of a coupling member of a power system, and the detachment member, according to an embodiment of the present disclosure.
FIG. 13 is a schematic plan view of a cell frame of a battery pack according to an embodiment of the present disclosure.
FIG. 14 is a schematic diagram of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

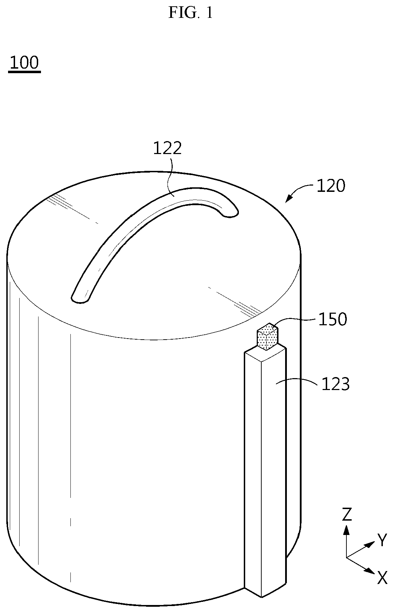

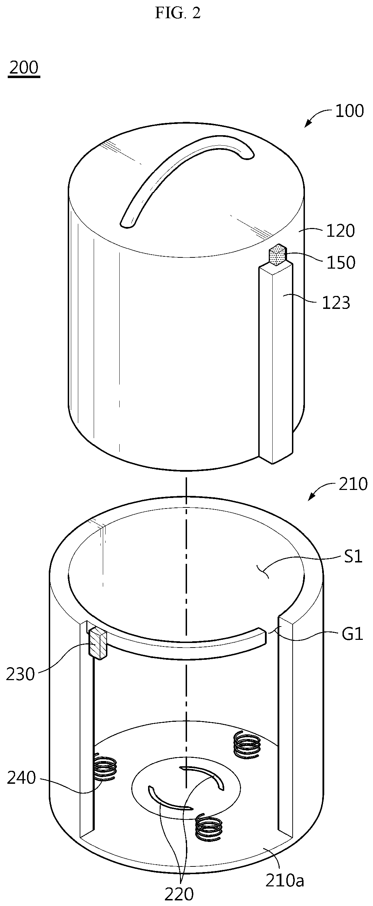

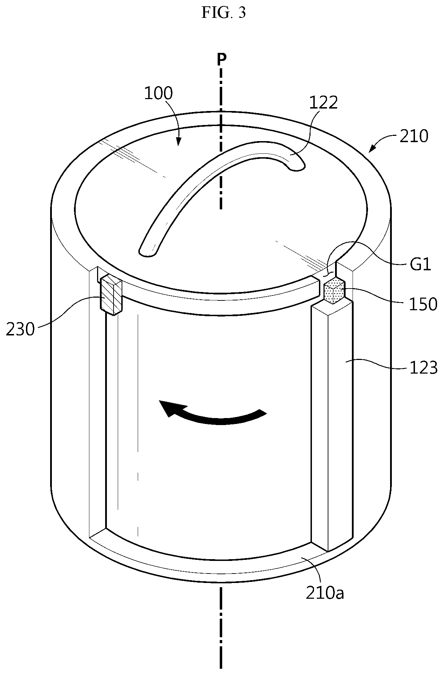

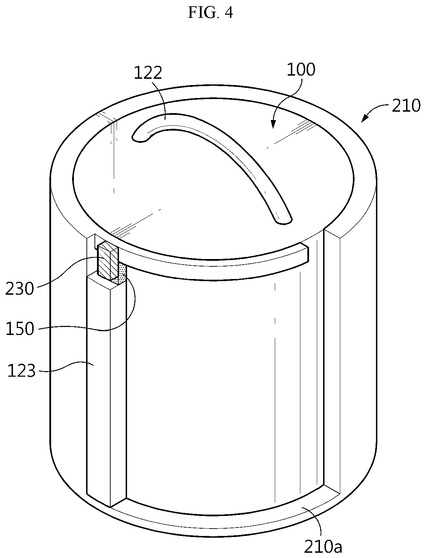

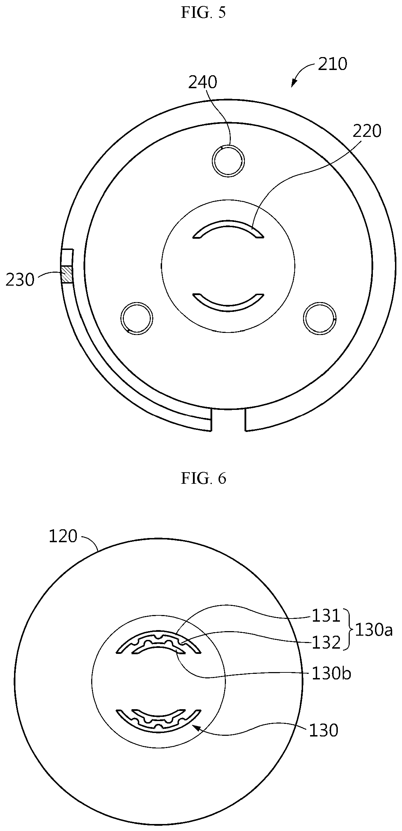

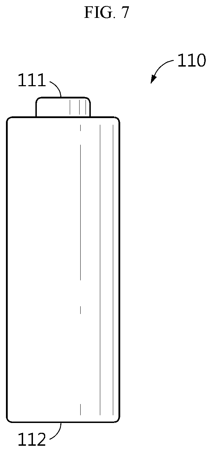

FIG. 1 is a schematic perspective view of a battery pack according to an embodiment of the present disclosure. FIG. 2 is a schematic exploded perspective view of separation of a battery pack from a mounting portion of a power system, according to an embodiment of the present disclosure. FIG. 3 is a schematic perspective view of insertion of a battery pack into a mounting portion of a power system, according to an embodiment of the present disclosure. FIG. 4 is a schematic perspective view of insertion of a battery pack into a mounting portion of a power system and then rotation of the battery pack, according to an embodiment of the present disclosure. FIG. 5 is a schematic plan view of a mounting portion of a power system according to an embodiment of the present disclosure. FIG. 6 is a schematic bottom view of a battery pack according to an embodiment of the present disclosure. FIG. 7 is a schematic front view of a battery cell of a battery pack according to an embodiment of the present disclosure.

Referring to FIGS. 1 through 7, a battery pack 100 according to an embodiment of the present disclosure may include a plurality of battery cells 110, a pack housing 120, and a second connection terminal 130.

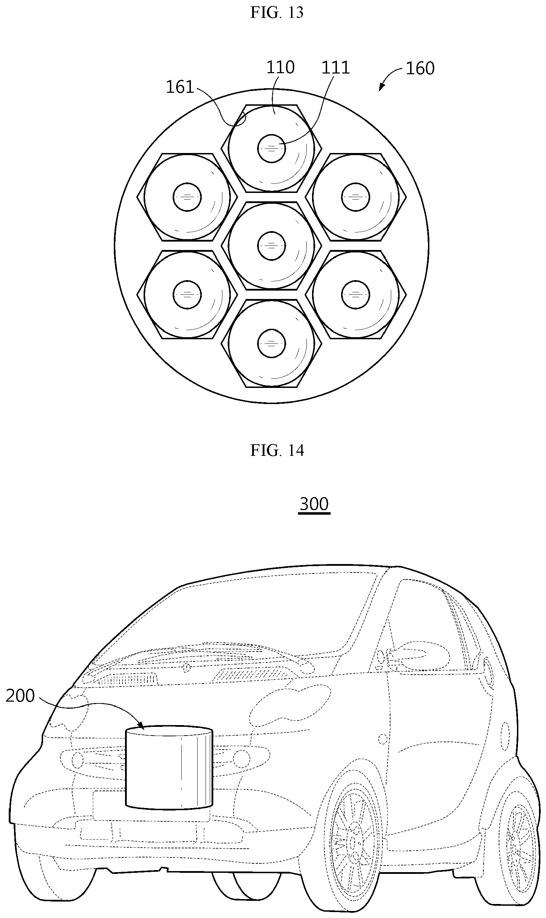

In detail, the battery pack 100 may be configured to supply power to a power system 200 of FIG. 2. The power system 200 may be configured to supply power to an external device. The external device may be a vehicle 300 of FIG. 14. The vehicle may be, for example, a hybrid vehicle, an electric vehicle, an electric scooter, an electric bicycle, an electric bike, or a computer.

The power system 200 may be configured to control charging and discharging of the battery pack 100. The power system 200 may include a mounting portion 210 having an accommodating space S1 for accommodating the battery pack 100. At least one first connection terminal 220 may be located in the accommodating space S1 of the mounting portion 210. The first connection terminal 220 may be configured to be electrically connected to the battery pack 100.

The plurality of battery cells 110 may include, for example, cylindrical cans. Electrode terminals 111 and 112 may be provided on upper and lower portions of the cylindrical can, respectively. For example, a positive electrode terminal 111 protruding upward may be provided on an upper portion of the battery cell 110. A negative electrode terminal 112 may be provided on a lower portion of the battery cell 110. For example, the lower portion of the battery cell 110 may be the negative electrode terminal 112.

Because the configuration of the cylindrical battery cell 110 is widely known to those skilled in the art at the time of filing the present disclosure, a more detailed description thereof will be omitted herein. Although a cylindrical battery cell is illustrated as an example in FIG. 7, the battery pack 100 according to the present disclosure is not limited to the configuration of the specific cylindrical battery cell 110. In other words, various types of battery cells 110 known at the time of filing of the present disclosure may be employed in the battery pack 100 according to the present disclosure.

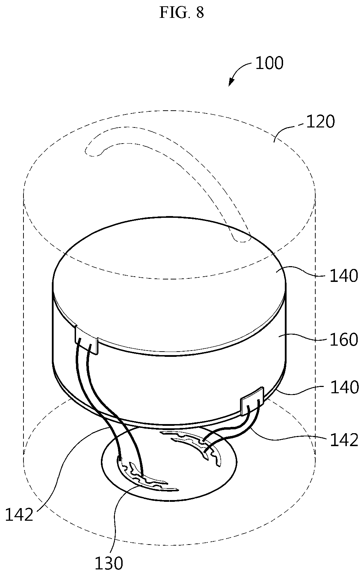

FIG. 8 is a schematic partial perspective view of some internal components of a battery pack according to an embodiment of the present disclosure.

Referring to FIG. 8 in conjunction with FIGS. 5 through 7, the battery pack 100 according to an embodiment of the present disclosure may further include a connection plate 140. The connection plate 140 may include metals such as aluminum, copper, and nickel. The positive electrode terminals 111 or the negative electrode terminals 112 of the plurality of cylindrical battery cells 110 may be configured to contact a portion of the connection plate 140. The connection plate 140 may electrically connect the plurality of battery cells 110 to each other in series, in parallel, or in series and in parallel.

The connection plate 140 may be electrically connected to the second connection terminal 130 via electric lines 142. For example, one end of the electric line 142 may be connected to a portion of the connection plate 140, and the other end thereof may be connected to the second connection terminal 130.

Referring back to FIGS. 1 through 3, the pack housing 120 may have an internal space to accommodate the plurality of battery cells 110. The pack housing 120 may have a cylindrical shape of which inside is empty. The pack housing 120 may include an electrically insulating material. For example, the pack housing 120 may include a polyvinyl chloride material. The pack housing 120 may be configured to be inserted into the accommodating space S1 of the mounting portion 210. The accommodating space S1 of the mounting portion 210 may have a size corresponding to an exterior shape of the pack housing 120.

For example, the accommodating space S1 may have a cylindrical shape formed to extend substantially in a vertical direction. The pack housing 120 may be configured to be rotatable from a location where the pack housing 120 is inserted into the accommodation space S1. For example, as shown in FIG. 3, when the pack housing 120 has a cylindrical shape, the pack housing 120 may be configured to be rotatable by using a central axis extending in the vertical direction from the center of a cylinder as a rotation axis P. The pack housing 120 may be configured to be coupled with the mounting portion 210 through the rotational movement, at the location where the pack housing 120 is inserted into the accommodation space S1 of the mounting portion 210. In this case, the pack housing 120 may be coupled to the mounting portion 210 by being coupled with a portion of the accommodating space S1.

A handle 122 may be provided on the upper portion of the pack housing 120. The handle 122 may be used by a user to transport the battery pack 100 to another location. When the pack housing 120 is inserted into the accommodating space S1 of the mounting portion 210, the handle 122 may be used by the user to move the battery pack 100 in an insertion direction or rotate the battery pack 100.

Referring back to FIGS. 5 through 8, the second connection terminal 130 may be configured to be electrically connected to the plurality of battery cells 110. As described above, the second connection terminal 130 may be electrically connected to the plurality of battery cells 110 via the connection plate 140 and the electric lines 142. When the pack housing 120 is coupled with the mounting portion 210 through the rotational movement, the second connection terminal 130 may be configured to contact the first connection terminal 220.

For example, when the pack housing 120 is inserted into the accommodating space S1 of the mounting portion 210 as shown in FIG. 3 and the pack housing 120 is about 90 degrees rotated clockwise along the central axis in the vertical direction as shown in FIG. 4, two second connection terminals 130 may be located in 12 o'clock and 6 o'clock directions on a plane, respectively, as shown in FIG. 6, to be in contact with two first connection terminals 220 respectively located in the 12 o'clock and 6 o'clock directions on the plane as shown in FIG. 5. The pack housing 120 may be located to face the first connection terminals 220. At this time, respective portions of the second connection terminals 130 may contact respective portions of the first connection terminals 220.

Therefore, according to this structure of the present disclosure, due to the inclusion of the second connection terminal 130 configured to contact the first connection terminal 220 when the pack housing 120 is coupled with the mounting portion 210 through a rotational movement, the connection terminals may be connected to each other through a rotational movement, and thus, when the battery pack 100 is inserted, a load (momentum) of the battery pack 100 may not be transmitted to the connection terminals, so that damage to the connection terminals may be minimized. In other words, unlike a conventional method in which connection terminals are electrically connected due to downward insertion of the pack housing 120, the connection terminals do not collide in the vertical direction, and thus the durability of the connection terminals may be effectively increased.

Referring back to FIGS. 3 and 6, the second connection terminal 130 may be positioned a predetermined distance apart from the rotation axis P of FIG. 3 for a rotational movement of the pack housing 120. The first connection terminal 220 may also be positioned a predetermined distance apart from the rotation axis P for a rotational movement of the pack housing 120, based on when the pack housing 120 is inserted into the mounting portion 210. At this time, the first connection terminal 220 may be positioned apart from the rotation axis P for a rotational movement of the pack housing 120 by a distance the second connection terminal 130 is spaced apart from the rotation axis P.

Therefore, according to this structure of the present disclosure, because the second connection terminal 130 is a predetermined distance apart from the rotation axis P for a rotational movement of the pack housing 120 and the first connection terminal 220 is also apart from the rotation axis P by the distance the second connection terminal 130 is apart from the rotation axis P, the pack housing 120 is coupled to the mounting portion 210 through the rotational movement of the pack housing 120, and thus the first connection terminal 220 may contact the second connection terminal 130. In other words, according to the present disclosure, due to a user's simple rotation of the battery pack 100 through the handle 122, not only the battery pack 100 may be fixed to the mounting portion 210, but also the first connection terminal 220 may be connected to the second connection terminal 130 with a high reliability.

Referring back to FIGS. 5 and 6, the second connection terminal 130 of the present disclosure may have two connection portions 130a and 130b each extending in a circular arc shape. The two connection portions 130a and 130b may be spaced apart from each other. The two connection portions 130a and 130b may be spaced apart from each other by a distance enabling interposition of the first connection terminal 220 therebetween. In other words, when the first connection terminal 220 is interposed between the two connection portions 130a and 130b, the two connection portions 130a and 130b and the first connection terminal 220 may contact each other.

Each of the two connection portions 130a and 130b of the second connection terminal 130 may include an extension part 131 and at least one connection part 132. The extension part 131 may have a shape extending in a circular arc shape.

Moreover, the connection part 132 may be a portion extending from each of the at least two extension parts 131 to between the at least two extension parts 131. The connection part 132 may be configured to contact the first connection terminal 220 when the pack housing 120 rotatably moves and is coupled with the mounting portion 210. In other words, the connection part 132 may be configured to physically contact other connection terminals. In other words, as shown in FIG. 3, when the battery pack 100 is inserted into the mounting portion 210 and then rotates 90 degrees, the first connection terminal 220 may be interposed between the two connection portions 130a and 130b of the second connection terminal 130. At this time, the connection parts 132 of the second connection terminal 130 may contact the first connection terminal 220.

For example, as shown in FIG. 6, one connection portion 130a may include three connection parts 132, and another connection portion 130b may include two connection parts 132.

The first connection terminal 220 may have a shape extending in a circular arc shape. However, the shape of the first connection terminal 220 is not necessarily limited to this shape. For example, the first connection terminal 220 and the second connection terminal 130 may have opposite shapes to each other. In other words, the first connection terminal 220 may have a similar configuration as the at least two extension parts 131 and the at least one connection part 132.

Therefore, according to this structure of the present disclosure, because the second connection terminal 130 of the present disclosure includes the extension part 131 and the connection part 132, when the pack housing 120 rotatably moves and is coupled with the mounting portion 210, the second connection terminal 130 may contact the first connection terminal 220 with a high reliability. Accordingly, according to the present disclosure, electrical connection reliability between the battery pack 100 and the power system 200 may be improved.

Referring back to FIGS. 1 through 6, the mounting portion 210 of the power system 200 of the present disclosure may include an insertion guide groove G1. The insertion guide groove G1 may be formed by recessing a portion of an inner surface of the accommodating space S1 in an outward direction. The insertion guide groove G1 may have a shape extending in the vertical direction. For example, as shown in FIG. 2, the insertion guide groove G1 may have a shape extending from an upper end of the mounting portion 210 to a lower end of the mounting portion 210.

The pack housing 120 may include a guide bar 123. The guide bar 123 may have a shape in which a portion of an outer surface of the pack housing 120 protrudes outward. The guide bar 123 may have a shape extending in the vertical direction. The guide bar 123 is a separate member from the pack housing 120, and may have an inner surface coupled to the pack housing 120. The guide bar 123 may have a rectangular bar shape. However, the guide bar 123 is not necessarily limited to this shape, and various shapes may be applied.

Moreover, when the battery pack 100 is inserted into the accommodating space S1 of the mounting portion 210, the guide bar 123 may guide the battery pack 100 to a location where the second connection terminal 130 of the battery pack 100 does not face the first connection terminal 220. In other words, according to the present disclosure, when the pack housing 120 reaches the bottom of the accommodating space S1, a formation location of the guide bar 123 on the outer surface of the pack housing 120 may be set so that the second connection terminal 130 does not face the first connection terminal 220. In other words, although not shown in the drawings, the two second connection terminals 130 may be positioned on the lower surface of the pack housing 120 in a 9 o'clock direction and a 3 o'clock direction, respectively, in a plan view. Thereafter, the battery pack 100 is inserted into the accommodating space S1 of the mounting portion 210 and then rotates clockwise at an angle of approximately 90 degrees, and thus the second connection terminal 130 and the first connection terminal 220 may be positioned to face each other and may be in physical contact with each other.

Therefore, according to this structure of the present disclosure, due to inclusion of the guide bar 123 configured to be inserted into the insertion guide groove G1 of the mounting portion 210, when the battery pack 100 is inserted into the accommodating space S1 of the mounting portion 210, the pack housing 120 may be appropriately rotated and disposed such that the second connection terminal 130 and the first connection terminal 220 do not collide with each other. Thus, according to the present disclosure, damage to the connection terminals due to incorrect insertion may be reduced, leading to an increase in the durability of the battery pack 100.

The mounting portion 210 may include an open portion 210a formed by opening a portion of the inner surface of the mounting portion 210 to the outside. The open portion 210a may form an open space where the guide bar 123 inserted into the insertion guide groove G1 is able to rotatably move. The open portion 210a may have a shape extending from the insertion guide groove G1 in the rotation direction. In other words, after the guide bar 123 is completely inserted into the insertion guide groove G1, while the guide bar 123 is being inserted into the open space of the open portion 210a, the guide bar 123 may rotate clockwise or counterclockwise along the rotation axis P. Accordingly, in the present disclosure, because the guide bar 123 may rotate while being inserted into the open portion 210a, the pack housing 120 can rotate smoothly clockwise or counterclockwise.

However, the open portion 210a of the mounting portion 210 is not necessarily limited to an open portion. In other words, the mounting portion 210 may have an outer wall formed by recessing a portion of the inner surface of the accommodation space S1 in an outward direction so as to form a recessed space in which the guide bar 123 is rotatable. In other words, the recessed portion of the outer wall is formed to have a thinner outer wall than a remaining portion, and thus may be referred to as a portion having a step.

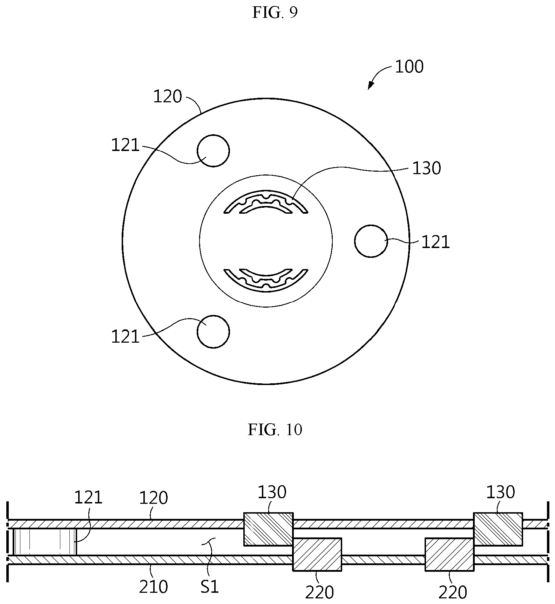

FIG. 9 is a schematic bottom view of a battery pack according to the invention.

Referring to FIG. 9 in conjunction with FIG. 5, a battery pack 100 of FIG. 9 may include a second connection terminal 130 having only one connection portion, when compared with the battery pack 100 of FIG. 6. The battery pack 100 of FIG. 9 includes a support 121, when compared with the battery pack 100 of FIG. 6

In detail, a pack housing 120 of the battery pack 100 according to the invention includes the support 121. The support 121 is a portion of a lower surface of the pack housing 120 protrudes from an outer surface of the pack housing 120 in a direction in which the pack housing 120 is inserted into the mounting portion 210.

For example, as shown in FIG. 9, the support 121 may have a cylindrical shape protruding downward from the lower surface of the pack housing 120. The support 121 may be configured to face an inner bottom surface of the accommodating space S1 when the battery pack 100 is inserted into the accommodating space S1 of the mounting portion 210. When the insertion of the battery pack 100 into the accommodating space S1 is terminated, the support 121 may be supported upward by the inner bottom surface of the accommodating space S1. In other words, the support 121 may be configured such that the pack housing 120 is a predetermined distance apart from the bottom surface of the accommodating space S of the mounting portion 210.

FIG. 10 is a schematic vertical cross-sectional view of a second connection terminal and a first connection terminal of a battery pack according to another embodiment of the present disclosure.

Referring to FIG. 10 in conjunction with FIG. 9, a second connection terminal 130 of the battery pack 100 according to another embodiment of the present disclosure may have a shape protruding downward from the lower surface of the pack housing 120. A protrusion height of the second connection terminal 130 may be smaller than a length by which the support 121 protrudes downward from the pack housing 120.

A first connection terminal 220 of a power system 200 according to another embodiment of the present disclosure may have a shape protruding upward from the bottom surface of the accommodation space S1 of the mounting portion 210. A protrusion height of the first connection terminal 220 may be smaller than the length by which the support 121 protrudes downward from the pack housing 120.

Therefore, according to this structure of the present disclosure, due to inclusion of the support 121 in the pack housing 120, the battery pack 100 may be mounted on the mounting portion 210 while the pack housing 120 is being a predetermined apart from the bottom surface of the accommodating space S1 of the mounting portion 210. Thereafter, when the pack housing 120 is rotated and moved, the second connection terminal 130 protruding downward from the lower surface of the pack housing 120, and the first connection terminal 220 protruding upward from the bottom surface of the accommodating space S1 of the mounting portion 210 may meet each other and thus may be coupled to each other or contact each other. In other words, according to the present disclosure, a separation space between the pack housing 120 and the inner lower surface of the mounting portion 210 is formed due to formation of the support 121 on the outer surface of the pack housing 120 in the insertion direction, and thus, while the battery pack 100 is being inserted into the accommodating space S1 of the mounting portion 210, the second connection terminal 130 and the first connection terminal 220 may be prevented from being damaged due to collision with other components.

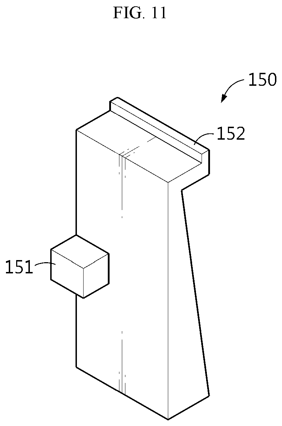

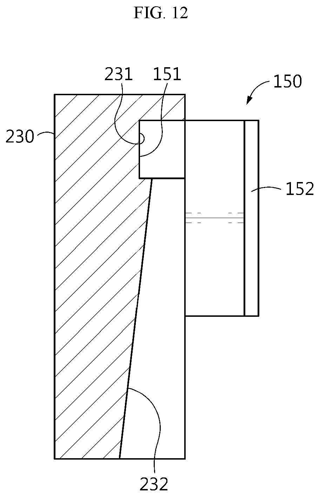

FIG. 11 is a schematic perspective view of a detachment member of a battery pack according to an embodiment of the present disclosure. FIG. 12 is a schematic horizontal cross-sectional view of a coupling member of a power system, and the detachment member, according to an embodiment of the present disclosure.

Referring to FIGS. 11 and 12 in conjunction with FIGS. 3 and 4, the battery pack 100 according to an embodiment of the present disclosure may further include a detachment member 150. The detachment member 150 may be configured to restrict the rotational movement of the pack housing 120 inserted into the mounting portion 210 or release the restriction of the rotational movement so that the rotational movement of the pack housing 120 is possible. For example, the detachment member 150 may be coupled to a portion of the mounting portion 210 in a male-female coupling method.

The mounting portion 210 may include a coupling portion 230 that is mechanically coupled to the detachment member 150. A fixing groove 231 recessed with a predetermined size may be formed in the coupling member 230. The detachment member 150 may include a fixing protrusion 151 configured to be inserted into the fixing groove 231. A protruding portion of the fixing protrusion 151 may be configured to be inserted into a recessed space of the fixing groove 231 when the pack housing 120 rotatably moves and is coupled to the mounting portion 210.

Furthermore, the detachment member 150 may be configured to be movable so that the fixing protrusion 151 may be separated from the fixing groove 231. An upper portion of the detachment member 150 may be provided with an extraction portion 152 configured to be pulled by a user. When the user pulls the extraction portion 152 inward, the fixing protrusion 151 may be separated from the fixing groove 231.

The coupling member 230 may have an inclined surface 232 extending from one end of the coupling member 230 to the fixing groove 231. The inclined surface 232 may be formed to be further recessed to a predetermined depth than a remaining outer surface of the coupling member 230. The inclined surface 232 may be configured such that a gradual recessing depth from the one end of the coupling member 230 to the fixing groove 231 decreases. Accordingly, the fixing protrusion 151 included in the detachment member 150 may be moved up to the fixing groove 231 along the inclined surface 232 of the coupling member 230.

Therefore, according to this structure of the present disclosure, when the pack housing 120 rotatably moves in the accommodating space S1 of the mounting portion 210 and thus the second connection terminal 130 and the first connection terminal 220 establish a connection, the rotational movement of the pack housing 120 may be restricted through the detachment member 150. When the battery pack 100 needs to be discharged from the accommodating space S1 of the mounting portion 210, a fixing state between the detachment member 150 and the coupling member 230 may be released using the extraction portion 152 of the detachment member 150. Accordingly, the present disclosure may easily release the restriction on the rotational movement of the pack housing 120.

FIG. 13 is a schematic plan view of a cell frame of a battery pack according to an embodiment of the present disclosure.

Referring to FIG. 13, a cell frame 160 of the battery pack 100 according to an embodiment of the present disclosure may be configured to accommodate a plurality of battery cells 110 therein. The cell frame 160 may include an electrically insulating material. The cell frame 160 may include, for example, a polyvinyl chloride material. In the cell frame 160, an internal space 161 for accommodating the battery cells 110 may have a honeycomb shape. In other words, the cell frame 160 may have an internal space 161 in the form of a hexagonal column. In the cell frame 160, a plurality of internal spaces 161 each in the form of a hexagonal column may be arranged adjacent to one another.

Therefore, according to this structure of the present disclosure, due to inclusion of the cell frame 160 having the internal space 161 in a honeycomb shape, the cell frame 160 may be made lightweight and may have a high mechanical rigidity, and thus the weight of the battery pack 100 may be reduced and also the plurality of battery cells 110 accommodated in the cell frame 160 may be effectively protected from external impact.

FIG. 14 is a schematic diagram of a vehicle according to an embodiment of the present disclosure.

Referring to FIG. 14 together with FIGS. 1 and 2, the vehicle 300 of the present disclosure includes a power system 200. The power system 200 may include the battery pack 100, and the mounting portion 210 having the accommodating space S1 for accommodating the battery pack 100. For example, the vehicle 300 may include a chassis on which the power system 200 may be mounted. The vehicle 300 may include an electric motor configured to be driven with power received from the power system 200. The electric motor may provide a driving force for moving the vehicle 300. However, the vehicle 300 is not limited to the type shown in FIG. 14, and the vehicle 300 may be, for example, a hybrid vehicle, an electric vehicle, an electric scooter, an electric bicycle, an electric bike, or a computer.

The present disclosure also provides the power 200 configured to supply power to an external device such as the vehicle 300. The power system 200 may include the mounting portion 210 having the accommodating space S1 for accommodating the battery pack 100. The power system 200 may include the at least one first connection terminal 220 electrically connected to the external device. The first connection terminal 220 may be located within the mounting portion 210. For example, the first connection terminal 220 may be provided on the bottom surface of the mounting portion 210.

Referring back to FIGS. 1 through 6, the power system 200 may include the above-described battery pack 100. The battery pack 100 may include the plurality of battery cells 110, and the pack housing 120 having the internal space to accommodate the plurality of battery cells 110. The pack housing 120 may be inserted into the accommodating space S1 of the mounting portion 210. For example, the pack housing 120 may have a cylindrical exterior shape. The accommodating space S1 of the mounting portion 210 may also have an approximately cylindrical shape. The pack housing 120 may be configured to be coupled with the mounting portion 210 through a rotational movement, at a location where the pack housing 120 is inserted into the accommodation space S1 of the mounting portion 210. The battery pack 100 may also include the second connection terminal 130 electrically connected to the plurality of battery cells 110.

The mounting portion 210 may include the open portion 210a formed by recessing a portion of the inner surface of the mounting portion 210 outwards by a protrusion size of the guide bar 123 so that the guide bar 123 inserted into the insertion guide groove G1 is movable.

Moreover, as shown in FIG. 5, the power system 200 may include an elastic member 240 in the accommodating space S1 of the mounting portion 210. The elastic member 240 may be configured to elastically press the pack housing 120 in a direction opposite to the insertion direction when the battery pack 100 is inserted into the mounting portion 210. When the insertion of the battery pack 100 into the accommodating space S1 of the mounting portion 210 is completed, the elastic member 240 may support the lower surface of the pack housing 120 upwards.

For example, as shown in FIG. 5, the power system 200 may include three elastic members 240 in the accommodating space S1 of the mounting portion 210. The elastic member 240 may be configured to elastically press the lower surface of the pack housing 120 upwards when the battery pack 100 is inserted into the accommodating space S1 of the mounting portion 210. In other words, the elastic member 240 may serve to cushion an insertion force of the battery pack 100 by elastically pressing the lower surface of the pack housing 120.

Therefore, according to this structure of the present disclosure, due to the inclusion of the elastic member 240 configured to elastically press the pack housing 120, the force of the load of the battery pack 100 may be effectively buffered, and thus damage due to a collision between the inside of the mounting portion 210 and the battery pack 100 while the battery pack 100 is being inserted into the mounting portion 210 may be minimized.

These configurations of the power system 200 may be the same as those described above. Accordingly, a more detailed description of the configurations will be omitted.

Meanwhile, although terms indicating directions such as up, down, left, right, front, and rear are used in the present specification, these terms are only for convenience of description, and it is apparent to those skilled in the art that these terms may vary depending on a position of a target object or a position of an observer.

### [Description of reference numerals]

| | | | |
|---|---|---|---|
| 100: | battery module | 110: | battery cell |
| 120: | pack housing | 130: | second connection terminal |
| 131, 132: | extension part, connection part | 140: | connection plate |
| 142: | electric wires | 160: | cell assembly |
| 161: | internal space | S1: | accommodating space |
| 121: | support | 122: | handle |
| 200: | power system | 210: | mounting portion |
| 220: | first connection terminal | P: | rotation axis |
| G1: | insertion guide groove | 123: | guide bar |
| 210a: | open portion | | |
| 150, 151, 152: | detachment member, fixing protrusion, extraction portion | | |
| 230: | coupling member | | |
| 231, 232: | fixing groove, inclined surface | | |
| 240: | elastic member | | |
| 300: | vehicle | | |

## Claims

1. A battery pack (100) for a power system (200) including a mounting portion (210) having an accommodating space (S1) and at least one first connection terminal (220) located on a surface in the accommodating space (S1) of the mounting portion (210) that is perpendicular to an insertion direction between the mounting portion (210) and a pack housing (120) of the battery pack (100), the battery pack (100) configured to electrically connect to the power system (200) and comprising:
a plurality of battery cells (110);
the pack housing (120) having an internal space to accommodate the plurality of battery cells (110), and configured to be inserted into the accommodating space (S1) of the mounting portion (210) and to be coupled to the mounting portion (210) at an insertion portion through a rotational movement; and
a second connection terminal (130, 130a, 130b) electrically connected to the plurality of battery cells (110), located on a surface of the pack housing (120) that is perpendicular to the insertion direction between the mounting portion (210) and the pack housing (120), and configured to be contactable with the first connection terminal (220) when the pack housing (120) is coupled to the mounting portion (210) through the rotational movement;
wherein the second connection terminal (130, 130a, 130b) is located a predetermined distance apart from a rotation axis of the rotation movement of the pack housing (120);
wherein the second connection terminal (130, 130a, 130b) comprises:
at least two extension parts (131) extending in a circular arc shape; and
at least one connection part (132) extending from each of the extension parts (131) to between the extension parts (131);
**characterized in that** the pack housing (120) further comprises a support (121) formed as a portion of a lower surface of the pack housing (120), which protrudes from an outer surface of the pack housing (120) in the insertion direction in which the pack housing (120) is inserted into the mounting portion (210).

2. The battery pack of claim 1, wherein the mounting portion (210) comprises an insertion guide groove (G1) formed by recessing a portion of an inner surface of the accommodating space (S1) in an outward direction and extending in a vertical direction, and
the pack housing (120) comprises a guide bar (123) formed as a portion of the outer surface of the pack housing (120) which protrudes in the outward direction and extends in the vertical direction, and configured to be inserted into the insertion guide groove (G1).

3. The battery pack (100) of claim 1, further comprising a detachment member (150) that is configured to restrict the rotational movement of the pack housing (120) in the mounting portion (210) or release the restriction of the rotational movement so that the rotational movement of the pack housing (120) is possible.

4. The battery pack (100) of claim 3, wherein the mounting portion (210) comprises a fixing groove (231) recessed in a predetermined size, and
the detachment member (150) comprises a fixing protrusion (151) configured to be inserted into the fixing groove (231).

5. A power system (200) configured to supply power to an external device, the power system (200) comprising:
a mounting portion (210) having an accommodating space (S1);
at least one first connection terminal (220) electrically connected to the external device and located on a surface in the accommodating space (S1) of the mounting portion (210) that is perpendicular to an insertion direction between the mounting portion (210) and a pack housing (120) of a battery pack (100) of the power system (200); and
the battery pack (100) according to any one of the preceding claims.

6. The power system (200) of claim 5, further comprising an elastic member (240) configured to elastically press the pack housing (120) in a direction opposite to the insertion direction when the battery pack (100) is inserted into the mounting portion (210).

7. A vehicle (300) including the power system (200) of any of claims 5 and 6.

## Patentansprüche

1. Batteriepack (100) für ein Stromversorgungssystem (200), das einen Montageabschnitt (210) mit einem Aufnahmeraum (S1) und mindestens einen ersten Verbindungsanschluss (220) aufweist, der sich auf einer Oberfläche in dem Aufnahmeraum (S1) des Montageabschnitts (210) befindet, die senkrecht zu einer Einführrichtung zwischen dem Montageabschnitt (210) und einem Packgehäuse (120) des Batteriepacks (100) ist, wobei der Batteriepack (100) konfiguriert ist, elektrisch mit dem Stromversorgungssystem (200) verbunden zu werden, und Folgendes aufweist:
mehrere Batteriezellen (110);
wobei das Packgehäuse (120) einen Innenraum aufweist, um die mehreren Batteriezellen (110) aufzunehmen, und konfiguriert ist, in den Aufnahmeraum (S1) des Montageabschnitts (210) eingeführt zu werden und mit dem Montageabschnitt (210) an einem Einführabschnitt durch eine Drehbewegung gekoppelt zu werden; und
einen zweiten Verbindungsanschluss (130, 130a, 130b), der elektrisch mit den mehreren Batteriezellen (110) verbunden ist, der sich auf einer Oberfläche des Packgehäuses (120) befindet, die senkrecht zu der Einführrichtung zwischen dem Montageabschnitt (210) und dem Packgehäuse (120) ist, und konfiguriert ist, mit dem ersten Verbindungsanschluss (220) kontaktierbar zu sein, wenn das Packgehäuse (120) durch die Drehbewegung mit dem Montageabschnitt (210) gekoppelt ist;
wobei sich der zweite Verbindungsanschluss (130, 130a, 130b) in einem vorbestimmten Abstand von einer Drehachse der Drehbewegung des Packgehäuses (120) befindet;
wobei der zweite Verbindungsanschluss (130, 130a, 130b) Folgendes aufweist:
mindestens zwei Verlängerungsteile (131), die sich in einer Kreisbogenform erstrecken; und
mindestens ein Verbindungsteil (132), das sich von jedem der Verlängerungsteile (131) bis zwischen die Verlängerungsteile (131) erstreckt;
**dadurch gekennzeichnet, dass** das Packgehäuse (120) ferner eine Stütze (121) aufweist, die als ein Abschnitt einer unteren Oberfläche des Packgehäuses (120) ausgebildet ist, die von einer äußeren Oberfläche des Packgehäuses (120) in der Einführrichtung vorsteht, in der das Packgehäuse (120) in den Montageabschnitt (210) eingeführt wird.

2. Batteriepack nach Anspruch 1, wobei der Montageabschnitt (210) eine Einführführungsnut (G1) aufweist, die durch Vertiefen eines Abschnitts einer inneren Oberfläche des Aufnahmeraums (S1) in einer Auswärtsrichtung ausgebildet ist und sich in einer vertikalen Richtung erstreckt, und
das Packgehäuse (120) eine Führungsstange (123) aufweist, die als ein Abschnitt der äußeren Oberfläche des Packgehäuses (120) ausgebildet ist, die in der Auswärtsrichtung vorsteht und sich in der vertikalen Richtung erstreckt, und konfiguriert ist, in die Einführführungsnut (G1) eingeführt zu werden.

3. Batteriepack (100) nach Anspruch 1, ferner aufweisend ein Löseelement (150), das konfiguriert ist, die Drehbewegung des Packgehäuses (120) in dem Montageabschnitt (210) zu beschränken oder die Beschränkung der Drehbewegung freizugeben, so dass die Drehbewegung des Packgehäuses (120) möglich ist.

4. Batteriepack (100) nach Anspruch 3, wobei der Montageabschnitt (210) eine Befestigungsnut (231) aufweist, die in einer vorbestimmten Größe vertieft ist, und
das Löseelement (150) einen Befestigungsvorsprung (151) aufweist, der konfiguriert ist, in die Befestigungsnut (231) eingeführt zu werden.

5. Stromversorgungssystem (200), das konfiguriert ist, Strom an eine externe Vorrichtung zu liefern, wobei das Stromversorgungssystem (200) Folgendes aufweist:
einen Montageabschnitt (210) mit einem Aufnahmeraum (S1);
mindestens einen ersten Verbindungsanschluss (220), der elektrisch mit der externen Vorrichtung verbunden ist und sich auf einer Oberfläche in dem Aufnahmeraum (S1) des Montageabschnitts (210) befindet, die senkrecht zu einer Einführrichtung zwischen dem Montageabschnitt (210) und einem Packgehäuse (120) eines Batteriepacks (100) des Stromversorgungssystems (200) ist; und
den Batteriepack (100) nach einem der vorhergehenden Ansprüche.

6. Stromversorgungssystem (200) nach Anspruch 5, ferner aufweisend ein elastisches Element (240), das konfiguriert ist, das Packgehäuse (120) elastisch in eine Richtung entgegengesetzt zu der Einführrichtung zu drücken, wenn der Batteriepack (100) in den Montageabschnitt (210) eingeführt wird.

7. Fahrzeug (300), das das Stromversorgungssystem (200) nach einem der Ansprüche 5 und 6 aufweist.

## Revendications

1. Bloc-batterie (100) pour un système d'alimentation (200) comprenant une partie de montage (210) possédant un espace d'hébergement (S1) et au moins une première borne de connexion (220) située sur une surface dans l'espace d'hébergement (S1) de la partie de montage (210), qui est perpendiculaire à une direction d'insertion entre la partie de montage (210) et un boîtier de bloc (120) du bloc-batterie (100), le bloc-batterie (100) étant configuré pour se connecter électriquement au système d'alimentation (200), et comprenant :
une pluralité de cellules de batterie (110) ;
le boîtier de bloc (120) possédant un espace interne pour recevoir la pluralité de cellules de batterie (110), et étant configuré pour être inséré dans l'espace d'hébergement (S1) de la partie de montage (210), et être couplé à la partie de montage (210) dans une partie d'insertion par le biais d'un mouvement rotatif ; et
une deuxième borne de connexion (130, 130a, 130b) connectée électriquement à la pluralité de cellules de batterie (110), située sur une surface du boîtier de bloc (120), qui est perpendiculaire à une direction d'insertion entre la partie de montage (210) et le boîtier de bloc (120), et configurée pour pouvoir être au contact de la première borne de connexion (220) lors du couplage du boîtier de bloc (120) avec la partie de montage (210) par le biais du mouvement rotatif ;
la deuxième borne de connexion (130, 130a, 130b) étant située à une distance prédéterminée d'un axe de rotation du mouvement rotatif du boîtier de bloc (120) ;
la deuxième borne de connexion (130, 130a, 130b) comprenant :
au moins deux pièces d'extension (131) déployées sous une forme en arc de cercle ; et
au moins un élément de connexion (132) allant de chacune des pièces d'extension (131) à un point entre les pièces d'extension (131) ;
**caractérisé en ce que** le boîtier de bloc (120) comprend en outre un support (121) formé comme une partie d'une surface inférieure du boîtier de bloc (120), qui fait saillie d'une surface extérieure du boîtier de bloc (120) dans le sens de l'insertion dans laquelle le boîtier de bloc (120) est inséré dans la partie de montage (210).

2. Bloc-batterie selon la revendication 1, la partie de montage (210) comprenant une rainure de guidage d'insertion (G1) formée en évidant une partie d'une surface intérieure de l'espace d'hébergement (S1) en allant vers l'extérieur, et s'étendant verticalement, et
le boîtier de bloc (120) comprenant une barre de guidage (123) formée comme une partie de la surface extérieure du boîtier de bloc (120) faisant saillie vers l'extérieur et s'étendant verticalement, et configuré pour être inséré dans la rainure de guidage d'insertion (G1).

3. Bloc-batterie (100) selon la revendication 1, comprenant en outre un élément de détachement (150) configuré pour restreindre le mouvement rotatif du boîtier de bloc (120) dans la partie de montage (210), ou supprimer la restriction du mouvement rotatif afin de rendre possible le mouvement rotatif du boîtier de bloc (120).

4. Bloc-batterie (100) selon la revendication 3, la partie de montage (210) comprenant une rainure de fixation (231) évidée dans une taille prédéterminée, et
l'élément de détachement (150) comprenant une saillie de fixation (151) configurée pour être insérée dans la rainure de fixation (231).

5. Système d'alimentation (200) configuré pour alimenter un dispositif externe, le système d'alimentation (200) comprenant :
une partie de montage (210) possédant un espace d'hébergement (S1) ;
au moins une première borne de connexion (220) connectée électriquement au dispositif externe, et située sur une surface dans l'espace d'hébergement (S1) de la partie de montage (210), qui est perpendiculaire à une direction d'insertion entre la partie de montage (210) et un boîtier de bloc (120) d'un bloc-batterie (100) du système d'alimentation (200), et
le bloc-batterie (100) selon une quelconque des revendications précédentes.

6. Système d'alimentation (200) selon la revendication 5, comprenant en outre un élément élastique (240) configuré pour appuyer élastiquement sur le boîtier de bloc (120) dans une direction opposée à la direction d'insertion lorsque le bloc-batterie (100) est inséré dans la partie de montage (210).

7. Véhicule (300) comprenant le système d'alimentation (200) selon une quelconque des revendications 5 et 6.
